# FASCICULE DE BREVET EUROPEEN

(11) **EP 1 166 100 B1**
(45) Date de publication et mention de la délivrance du brevet: **07.05.2008**
(21) Numéro de dépôt: 00915278.6
(22) Date de dépôt: 31.03.2000
(51) Int. Cl.: G01N 30/42

(54) **DISPOSITIF AMELIORE DE CHROMATOGRAPHIE DE PARTAGE CENTRIFUGE A CELLULES**
VERBESSERTE ZELLULARE ZENTRIFUGALPARTITIONSCHROMATOGRAPHIEVORRICHTUNG
IMPROVED CELL CENTRIFUGE PARTITION CHROMATOGRAPHY DEVICE

(30) Priorité: 31.03.1999 FR 9904050
(43) Date de publication de la demande: 02.01.2002
(73) Titulaire: Etudes et Application Industrielle de Brevets - S.E.A.B., 94800 Villejuif (FR); IFREMER INSTITUT FRANCAIS DE RECHERCHE POUR L'EXPLOITATION DE LA MER, 92138 Issy-les-Moulineaux Cédex (FR)
(72) Inventeur: DE LA POYPE, François, F-92100 Boulogne Billancourt (FR); DE LA POYPE, Roland, F-75016 Paris (FR); DURAND, Patrick, F-44400 Reze les Nantes (FR); FOUCAULT, Alain, F-44300 Nantes (FR); LEGRAND, Jack, F-44600 Saint Nazaire (FR); PATISSIER, Gérard, F-44240 La Chapelle sur Erdre (FR); ROSANT, Jean-Michel, F-44300 Nantes (FR)
(74) Mandataire: Wagret, Frédéric
(86) Numéro de dépôt international: PCT/FR2000/000830
(87) Numéro de publication internationale: WO 2000/058722

(56) Documents cités:
- US-A- 4 551 251
- US-A- 4 857 187

## Description

La présente invention concerne un dispositif de chromatographie de partage centrifuge, comprenant au moins un anneau plat apte à être entraîné en rotation autour de son axe disposé sensiblement verticalement et comportant des cellules reliées par des conduits.

La chromatographie de partage centrifuge est une méthode de séparation des composés d'un mélange entre une phase mobile et une phase stationnaire pour chacune desquelles les composés ont une affinité différente.

L'invention concerne plus particulièrement une méthode de séparation liquide-liquide de deux phases non miscibles au contact l'une de l'autre. L'une, appelée phase stationnaire, est maintenue immobile à l'intérieur des cellules par l'intermédiaire de la force centrifuge à laquelle elle est soumise pendant que l'autre, appelée phase mobile, percole la phase stationnaire.

L'efficacité d'un tel dispositif, afin d'obtenir une bonne séparation, repose sur l'écoulement de la phase mobile à travers la phase stationnaire. Plus le jet entrant dans la cellule est atomisé, meilleure sera l'efficacité du dispositif.

On connaît, par le brevet US 4 968 428, un dispositif de chromatographie à contre-courant utilisant des anneaux plats empilés et entraînés en rotation. Ces anneaux comportent une multitude de cellules reliées entre elles en série par des conduits gravés sur lesdits anneaux.

L'orientation des conduits de ce dispositif est telle que le jet de liquide pénètre dans chaque cellule suivant une direction sensiblement tangentielle par rapport la rotation de l'anneau. Cette orientation entraîne des écoulements de la phase mobile à travers la phase stationnaire qui ne favorisent pas une bonne séparation des différents éléments. En effet, d'après les visualisations réalisées à l'aide d'une caméra asynchrone et d'un système stroboscopique ad hoc, le jet a tendance à se plaquer relativement rapidement aux parois des cellules, nuisant aux performances du système.

S'appuyant sur ce système de visualisation, la présente invention propose un dispositif de chromatographie de partage centrifuge d'un liquide à au moins deux phases, apte à favoriser la dispersion de la phase mobile à travers la phase stationnaire et présentant ainsi une meilleure efficacité.

A cette fin, selon l'invention, le dispositif de chromatographie de partage centrifuge d'un liquide à au moins deux phases, comprenant au moins un anneau plat apte à être entraîné en rotation autour de son axe disposé sensiblement verticalement, ledit anneau comportant une multitude de cellules dont la dimension dans une première direction est plus grande que la dimension suivant une seconde direction sensiblement perpendiculaire à la première, disposées côte à côte, réparties sur la périphérie dudit anneau et reliées en série entre elles par des conduits d'entrée et de sortie débouchant aux extrémités opposées respectives desdites cellules de manière à permettre la circulation du liquide, est caractérisé en ce que lesdits conduits sont disposés de manière que le jet d'alimentation du liquide pénètre dans les cellules dans une direction comportant au moins une composante radiale par rapport à l'axe de rotation de l'anneau.

De façon avantageuse, les conduits sont disposés de manière que le jet d'alimentation pénètre dans les cellules dans une direction radiale par rapport à l'axe de rotation de l'anneau.

Selon une forme préférée de réalisation, la direction de la dimension la plus grande de chaque cellule est radiale.

Selon une autre forme de réalisation, la direction de la dimension la plus grande de chaque cellule est inclinée par rapport à la direction radiale, pour permettre une meilleure atomisation du jet dévié de cette direction radiale.

De préférence, chaque cellule présente, vue de dessus, une forme sensiblement quadrangulaire.

Avantageusement, l'inclinaison de la direction de la plus grande dimension est comprise entre 10 et 50 degrés, de préférence entre 20 et 40 degrés, et préférentiellement de l'ordre de 30 degrés.

Selon une forme de réalisation préférée, la dimension des cellules dans la direction radiale est plus importante que la dimension dans la direction tangentielle.

Selon une autre forme de réalisation, la dimension des cellules dans la direction tangentielle est plus importante que la dimension dans la direction radiale.

De préférence, les cellules ainsi que les conduits sont traversants.

L'invention concerne également un dispositif de chromatographie de partage centrifuge d'un liquide à au moins deux phases comprenant au moins un anneau plat apte à être entraîné en rotation autour de son axe disposé sensiblement verticalement, ledit anneau comportant une multitude de cellules dont la dimension dans une première direction est plus grande que la dimension suivant une seconde direction sensiblement perpendiculaire à la première, disposées côte à côte, réparties sur la périphérie dudit anneau et reliées en série entre elles par des conduits d'entrée et de sortie disposés à des extrémités opposées desdites cellules de manière à permettre la circulation du liquide, et caractérisé en ce que la dimension des cellules dans la direction tangentielle est plus importante que la dimension dans la direction radiale.

Avantageusement, toutes les cellules d'un même anneau sont identiques.

L'invention sera mieux comprise à la lumière de la description qui suit se rapportant à un exemple de réalisation illustratif mais non limitatif, en référence aux dessins annexés dans lesquels :
- La figure 1 est une vue générale en coupe transversale de l'ensemble du dispositif selon un mode de réalisation de l'invention ;
- La figure 2 est une vue en perspective éclatée d'un empilement d'anneaux comportant des cellules de forme particulière ;
- La figure 3 est une vue de dessus d'un anneau de l'art antérieur ;
- La figure 4 est une vue de détail en plan des cellules de la figure 3 ;
- La figure 5 est une vue de dessus d'un anneau comportant une seconde forme de réalisation des cellules ;
- La figure 6 est une vue de détail en plan des cellules de la figure 5 ;
- La figure 7 est une vue de dessus d'un anneau comportant une troisième forme de réalisation des cellules ;
- La figure 8 est une vue de détail en plan d'une autre forme de réalisation, dans l'art antérieur, des cellules de la figure 3 ;

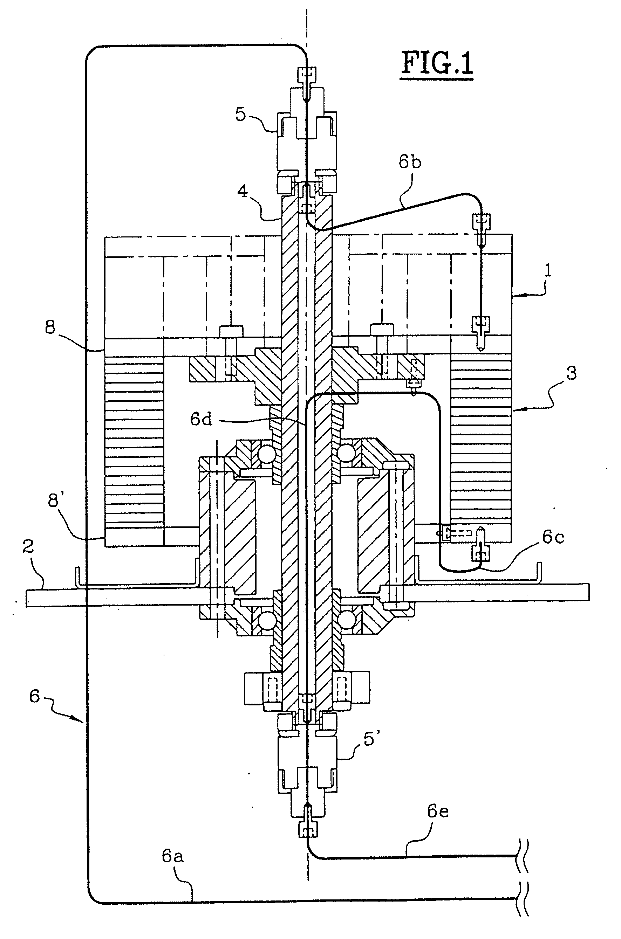

En référence à la figure 1, on a représenté, en coupe selon un plan vertical, un dispositif de chromatographie de partage centrifuge comportant un rotor 1 monté sur une table 2 et apte à être entraîné en rotation autour de l'axe A disposé verticalement, par l'intermédiaire de moyens d'entraînement connus et non représentés.

Le rotor 1 est constitué de plusieurs anneaux plats 3 empilés, de diamètre identique et solidaires d'une colonne 4 composée d'un tube creux disposé entre deux joints tournants haut 5 et bas 5', d'architecture connue. L'axe de rotation A correspond à l'axe des anneaux empilés.

La colonne 4 est alimentée en composition liquide à travers les joints 5 et 5' par l'intermédiaire d'un circuit de tuyaux 6 relié à des moyens d'alimentation et de récupération connus et non représentés.

Le dispositif étant apte à fonctionner selon deux modes, ascendant et descendant, chacun des deux joints tournants 5 et 5' peut constituer soit l'entrée, soit la sortie du système. Le trajet du liquide dans le circuit 6 est matérialisé par le trait gras sur la figure 1.

Dans le cas d'un fonctionnement descendant par exemple, une première branche 6a du circuit 6 relie les moyens d'alimentation (tels qu'une pompe) au joint tournant supérieur 5. Après avoir traversé le joint tournant 5, une deuxième branche 6b amène le liquide jusqu'à l'entrée du rotor 1 et, après l'avoir traversé, ressort en partie basse au niveau de la branche 6c. La branche 6d, située à l'intérieur de la colonne 4, amène le liquide jusqu'au joint inférieur 5' qui, après avoir traversé le joint, est récupéré au niveau de la branche 6e, et acheminé vers les moyens de récupération.

Ainsi, le liquide sous pression entre au niveau du joint supérieur 5 pour atteindre par le haut l'empilement d'anneaux 3 en passant par la colonne 4, puis circule à l'intérieur des cellules du premier anneau, puis celles du second et ainsi de suite, pour ressortir au niveau inférieur de l'empilement d'anneaux 3 et traverser la colonne 4 jusqu'au joint tournant inférieur 5'. Si le dispositif fonctionne en mode ascendant, le cheminement du liquide est inversé.

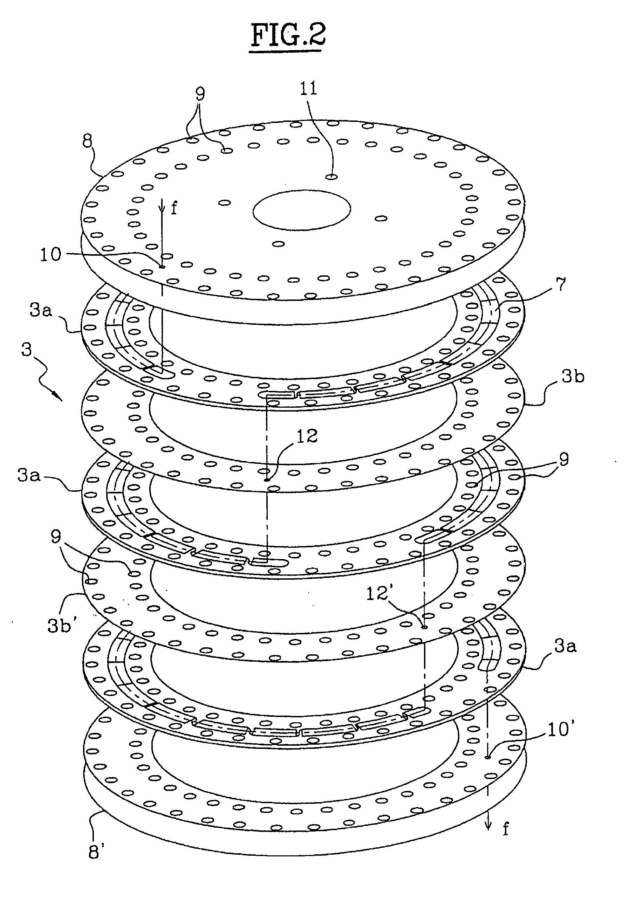

La figure 2 représente en perspective éclatée un empilement d'anneaux 3 du rotor selon une forme particulière de réalisation.

L'empilement est constitué, dans l'exemple montré, de trois anneaux plats 3a comportant des cellules 7. Entre deux anneaux 3a successifs s'intercale un joint annulaire 3b, 3b' afin de réaliser l'étanchéité entre les anneaux.

L'ensemble des trois anneaux 3a et des joints annulaires 3b et 3b' est plaqué entre deux flasques 8 et 8' circulaires et de même diamètre extérieur que les anneaux. Le flasque supérieur 8 a une forme sensiblement de disque tandis que le flasque inférieur 8' possède une forme annulaire.

Chacun de ces sept éléments, anneaux, joints annulaires et flasques, comportent deux séries concentriques de perçages 9 au niveau de leur périphérie afin de les solidariser entre eux à l'aide de vis ou de goujons (non représentés). Les flasques comportent en outre des trous de passage 10 et 10' du liquide disposés entre les deux séries de perçages 9. Le flasque supérieur 8 possède par ailleurs des perçages supplémentaires 11 disposés près du centre et permettant de solidariser l'ensemble à la colonne 4.

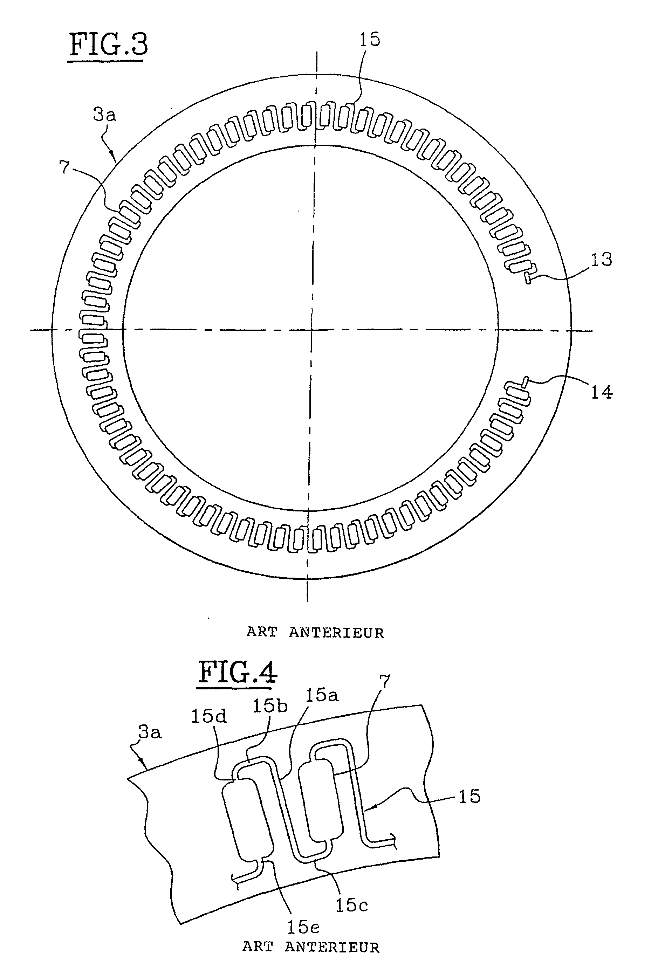

Les anneaux 3a présentent une série de cellules identiques 7 disposées côte à côte et réparties sur presque toute la périphérie des anneaux 3a entre les deux séries de perçages. Les cellules 7, décrites plus en détail en relation avec les figures 3 à 8, sont réalisées soit par évidement de matière sur l'anneau (elles sont alors dites traversantes), soit simplement gravées.

Les joints annulaires 3b, 3b' peuvent être réalisés en matériau souple tel que du Téflon (marque déposée) par exemple. Ils comportent chacun, tout comme les flasques 8 et 8', un trou supplémentaire 12, 12' apte à laisser passer le liquide lors de son passage entre deux anneaux consécutifs 3a.

Le trajet du liquide à travers l'empilement d'anneaux, dans le cas du fonctionnement descendant, est matérialisé par le trait discontinu référencé f.

L'alimentation en liquide de l'ensemble tournant se fait au niveau du trou 10 du flasque supérieur 8 que le liquide traverse pour atteindre le premier anneau 3a. Il pénètre dans la première cellule 7 puis passe de cellules en cellules à travers des conduits décrits plus loin reliant une cellule à la suivante, jusqu'à la dernière cellule de l'anneau. Là, le liquide traverse le joint annulaire 3b par l'intermédiaire du trou 12 et parcoure les cellules 7 du second anneau 3a et ainsi de suite jusqu'à atteindre le flasque inférieur 8'. Ensuite, après avoir traversé le trou 10' prévue dans ce dernier, le liquide est acheminé vers la colonne creuse 4 (branches 6c et 6d du circuit 6 sur la figure 1).

Dans le cas d'un fonctionnement ascendant, le trajet du liquide est l'inverse du précédent.

La figure 3 représente un anneau de l'art antérieur.

La figure 4 montre, en vue de dessus, une première forme de réalisation des cellules 7 d'un anneau 3a selon l'invention.

Pour l'ensemble des figures 4 à 7, les deux séries de perçages de fixation 9 n'ont pas été représentées dans un souci de clarté. Pour le même motif, l'échelle des distances entre les cellules 7 et les bords de l'anneau n'a pas été respectée.

L'anneau 3a comporte une multitude de cellules 7 réparties sur presque toute sa périphérie entre une cellule d'entrée 13 et une cellule de sortie 14. Il est à noter que, selon le sens de parcours du fluide, la cellule d'entrée devient celle de sortie.

Chaque cellule 7 est reliée à la cellule voisine par l'intermédiaire d'un conduit 15 étroit débouchant aux extrémités respectives de chaque cellule et sensiblement au milieu dans la direction tangentielle. Comme indiqué plus haut, les cellules 7 ainsi que les conduits 15, de forme générale cylindrique, peuvent être soit gravés, soit percés à travers l'anneau et sont alors appelés traversants.

Pour l'ensemble des figures, on qualifie de « radiale » toute direction parallèle à un rayon d'un anneau 3a et de « tangentielle » toute direction perpendiculaire à un rayon d'un anneau.

Les cellules 7 sont toutes identiques et de forme sensiblement quadrangulaire et la direction de la plus grande dimension est radiale. A titre indicatif, des dimensions possibles pour les cellules sont :
Largeur (dimension tangentielle) : 4mm
Longueur (dimension radiale) : 9.8mm

Le raccordement de chaque conduit 15 à deux cellules successives se fait au niveau des extrémités radiales des cellules 7. Ainsi, le jet de liquide pénètre dans la cellule selon une direction au moins sensiblement radiale et de préférence radiale, et ceci en mode ascendant comme descendant.

Pour cela, en référence à la figure 4, chaque conduit 15 reliant deux cellules consécutives comporte une première section sensiblement radiale 15a comprise entre deux sections sensiblement tangentielles 15b et 15c. Chacune de ces dernières est reliée à la cellule correspondante par l'intermédiaire d'une seconde section radiale 15d, 15e elle-même reliée à la cellule de façon que le liquide débouche dans la cellule suivant une direction radiale.

Grâce à cette disposition des conduits 15 par rapport aux cellules 7, la phase mobile est injectée dans les cellules de façon sensiblement radiale ce qui favorise son atomisation et augmente ainsi l'efficacité du dispositif.

Les diamètres des conduits sont compris entre 0,5 et 1 mm, de préférence de l'ordre de 0,7mm.

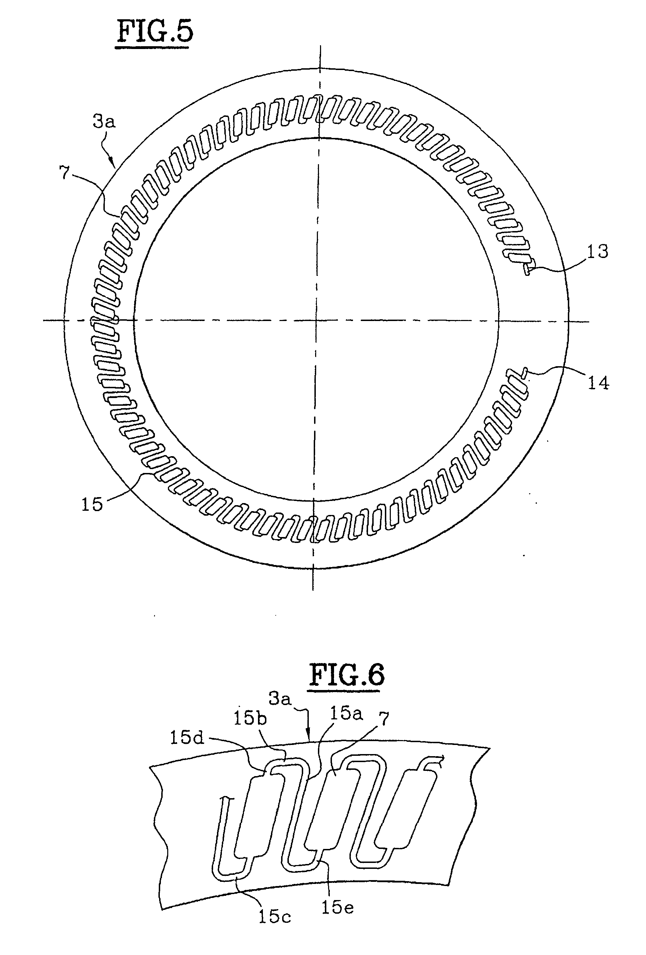

Les figures 5 et 6 décrivent une seconde forme de réalisation des cellules 7 et des conduits 15.

La géométrie générale est tout à fait semblable à celle des cellules des figures 3 et 4 mais dans ce cas la direction de la plus grande dimension des cellules n'est plus radiale mais inclinée par rapport à un rayon de l'anneau 3a.

En effet, la direction principale des cellules 7 présente une inclinaison comprise entre 10 et 50 degrés, de préférence entre 20 et 40 degrés et avantageusement de l'ordre 30 degrés.

La section de conduit 15a, qui était parallèle à la direction de la plus grande dimension des cellules sur les figures 3 et 4, reste parallèle à cette direction et présente donc la même inclinaison que les cellules 7.

Cependant, les sections des conduits 15d et 15e, débouchant dans les cellules, sont radiales afin de continuer à bénéficier d'une injection radiale de la phase mobile. Le point de raccordement de ces sections de conduit aux cellules est légèrement décalé par rapport à l'axe de symétrie des cellules contrairement à la forme de réalisation des figures 3 et 4.

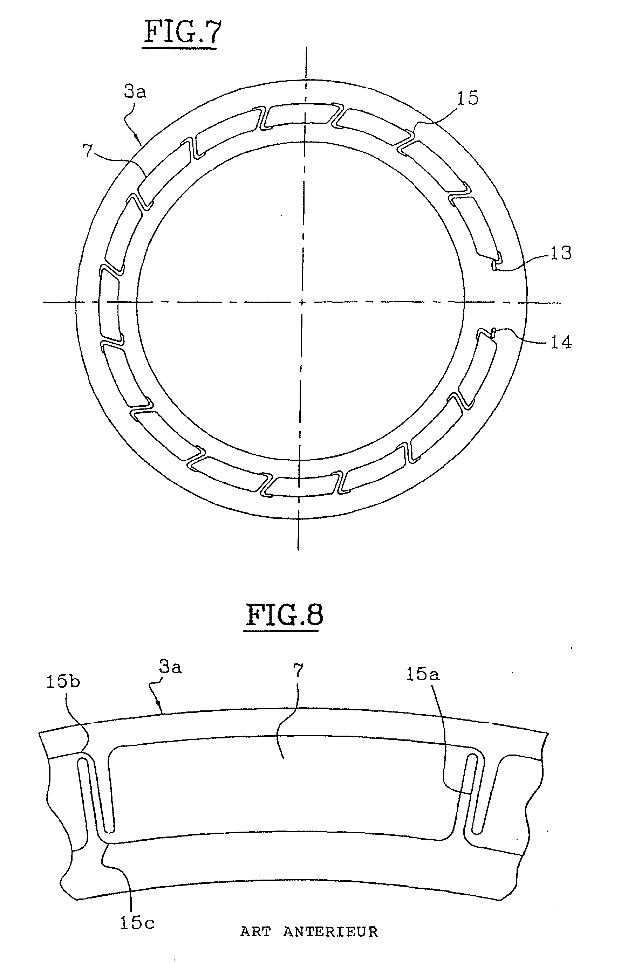

La figure 7 décrit une troisième forme de cellules, toujours réparties sur presque toute la périphérie d'un anneau 3a.

Dans ce cas, les cellules présentent la même inclinaison qu'aux figures 5 et 6 mais la dimension tangentielle de chaque cellule est plus importante que la dimension radiale. Par exemple, la dimension radiale pourrait être d'environ 10mm alors que la dimension tangentielle serait de 35mm pour une inclinaison d'environ 30 degrés.

Les conduits 15, en particulier leur raccordement 15d et 15e à deux cellules voisines 7, sont identiques à ceux de la figure 6, permettant toujours une injection radiale de la phase mobile dans la phase stationnaire.

Ce type de géométrie de cellules, plus larges que hautes, convient particulièrement aux systèmes aqueux biphasiques utilisés par exemple dans la purification des biopolymères (ADN, nucléotides, protéines).

Ainsi, grâce à la géométrie particulière de ses cellules, le dispositif selon l'invention est apte à favoriser la dispersion de la phase mobile à travers la phase stationnaire procurant ainsi une meilleure efficacité.

La figure 8 est une vue de détail en plan d'une autre forme de réalisation, dans l'art antérieur, des cellules de la figure 3.

## Revendications

1. Dispositif de chromatographie de partage centrifuge d'un liquide à au moins deux phases, comprenant au moins un anneau plat (3a) apte à être entraîné en rotation autour de son axe disposé sensiblement verticalement, ledit anneau (3a) comportant une multitude de cellules (7) ayant deux dimensions principales situées dans le plan de l'anneau, ces cellules (7) étant disposées côte à côte et réparties sur la périphérie dudit anneau (3a) et reliées en série entre elles par des conduits (15) d'entrée et de sortie débouchant aux extrémités opposées respectives des dites cellules (7) de manière à permettre la circulation du liquide, lesdits conduits (15) état disposés de manière que le jet d'alimentation du liquide pénètre dans les cellules (7) dans une direction comportant au moins une composante suivant le rayon de l'anneau dite radiale, **caractérisé en ce que** la direction d'une première dimension principale des cellules (7) est inclinée par rapport à la direction radiale de l'anneau, et la direction de la deuxième dimension principale est sensiblement perpendiculaire à la direction radiale.

2. Dispositif selon la revendication 1, **caractérisé en ce que** l'inclinaison de la direction de la première dimension principale de chaque cellule (7) par rapport à la direction radiale est comprise entre 10 et 50 degrés, de préférence entre 20 et 40 degrés, et préférentiellement de l'ordre de 30 degrés.

3. Dispositif selon l'une des revendications précédentes, **caractérisé en ce que** chaque cellule (7) présente, vue de dessus, une forme sensiblement quadrangulaire.

4. Dispositif selon l'une des revendications 1 à 3, **caractérisé en ce que** les cellules(7)sont traversantes.

5. Dispositif selon l'une des revendications 1 à 4, **caractérisé en ce que** les conduits (15) sont traversants.

6. Dispositif selon l'une des revendications précédentes, **caractérisé en ce que** toutes les cellules (7) d'un même anneau (3a) sont identiques.

7. Dispositif selon la revendication 4, **caractérisé en ce qu'**il présente des anneaux (3a), des joints annulaires (3b) et des flasques (8), chaque anneau (3a) comportant une multitude de cellules (7) réparties sur presque toute sa périphérie entre une cellule d'entrée (13) et une cellule de sortie (14), le liquide circulant dans les cellules (7) et traversant les flasques (8) au niveau de trous (10) et les joints (3b) au niveau de trous (12).

## Claims

1. A centrifugal partition chromatography device for a liquid with at least two phases, comprising at least a flat ring (3a) adapted to be rotated around its axis arranged substantially vertically, the said ring (3a) having a multitude of cells (7) with two main dimensions located in the plane of the ring, the said cells (7) being arranged side by side and distributed over the periphery of the said ring (3a) and connected in series to each other by inlet and outlet conduits (15) opening out at the respective opposite ends of the said cells (7) so as to enable the liquid to flow, the said conduits (15) being arranged so that the liquid supply jet penetrates into the cells (7) in a direction with at least one component along the radius of the ring, or radial direction, **characterised in that** the direction of a first main dimension of the cells (7) is inclined in relation to the radial direction of the ring, and the direction of the second main dimension is substantially perpendicular to the radial direction.

2. A device according to claim 1, **characterised in that** the inclination of the direction of the first main dimension of each cell (7) in relation to the radial direction ranges from 10 to 50 degrees, preferably 20 to 40 degrees, and most preferably about 30 degrees.

3. A device according to any of the previous claims, **characterised in that** each cell (7), seen from above, has a substantially quadrangular shape.

4. A device according to any of claims 1 to 3, **characterised in that** the cells (7) are through cells.

5. A device according to any of claims 1 to 4, **characterised in that** the conduits (15) are through conduits.

6. A device according to one the previous claims, **characterised in that** all the cells (7) in a given ring (3a) are identical.

7. A device according to claim 4, **characterised in that** it has rings (3a), annular seals (3b) and flanges (8), each ring (3a) comprising a multitude of cells (7) distributed over almost all of its periphery between an inlet cell (13) and an outlet cell (14), wherein the liquid flows in the cells (7) and through the flanges (8) at holes (10) and seals (3b) at holes (12).

## Patentansprüche

1. Vorrichtung zur zentrifugalen Verteilungschromatografie einer Flüssigkeit mit mindestens zwei Phasen, mit mindestens einem flachen Ring (3a), der um seine weitgehend senkrecht angeordnete Achse gedreht werden kann, wobei dieser Ring (3a) eine Vielzahl von Zellen (7) mit zwei wesentlichen Dimensionen in der Ebene des Rings umfasst und diese Zellen (7) nebeneinander und am Rand des Rings (3a) verteilt angeordnet und über Zu- und Abläufe (15) der Reihe nach miteinander verbunden sind, die jeweils, um ein Fließen der Flüssigkeit zu gewährleisten, in die gegenüberliegenden Enden dieser Zellen (7) münden, wobei diese Leitungen (15) so angeordnet sind, dass der Flüssigkeitsstrahl in einer als radiale Richtung bezeichnet in die Zellen (7) eindringt, die mindestens eine Komponente gemäß dem Radius des Rings umfasst, **dadurch gekennzeichnet, dass** die Richtung einer ersten wesentlichen Dimension der Zellen (7) in Bezug auf die radiale Richtung des Rings schräg und die Richtung der zweiten wesentlichen Dimension weitgehend senkrecht zur radialen Richtung ist.

2. Vorrichtung nach Anspruch 1, **dadurch gekennzeichnet, dass** die Neigung der Richtung der ersten wesentlichen Dimension jeder Zelle (7) in Bezug auf die radiale Richtung zwischen 10 und 50 Grad, vorzugsweise zwischen 20 und 40 Grad und am besten ca. 30 Grad beträgt.

3. Vorrichtung nach einem der vorausgehenden Ansprüche, **dadurch gekennzeichnet, dass** jede Zelle (7) von oben aus gesehen eine weitgehend viereckige Form aufweist.

4. Vorrichtung nach einem der vorausgehenden Ansprüche 1 bis 3, **dadurch gekennzeichnet, dass** die Zellen (7) durchgehend sind.

5. Vorrichtung nach einem der Ansprüche 1 bis 4, **dadurch gekennzeichnet, dass** die Leitungen (15) durchgehend sind.

6. Vorrichtung nach einem der vorausgehenden Ansprüche, **dadurch gekennzeichnet, dass** alle Zellen (7) des gleichen Rings (3a) identisch sind.

7. Vorrichtung nach Anspruch 4, **dadurch gekennzeichnet, dass** sie Ringe (3a), Ringdichtungen (3b) und Flansche (8) aufweist, wobei jeder Ring (3a) eine Vielzahl von Zellen (7) umfasst, die zwischen einer Eingangszelle (13) und einer Ausgangszelle (14) nahezu am gesamten Rand des Rings verteilt sind, wobei die Flüssigkeit in den Zellen (7) fließt und die Flansche (8) im Bereich der Löcher (10) sowie die Dichtungen im Bereich der Löcher (12) durchquert.
